# EUROPEAN PATENT SPECIFICATION

(11) **EP 3 422 527 B1**
(45) Date of publication and mention of the grant of the patent: **06.07.2022**
(21) Application number: 17305802.5
(22) Date of filing: 27.06.2017
(51) Int. Cl.: H02J 7/04, B60L 50/60, B60L 58/10, H02J 7/00, B60L 50/64

(54) **BATTERY APPARATUS**
BATTERIEVORRICHTUNG
DISPOSITIF DE PILOTAGE DE BATTERIE

(43) Date of publication of application: 02.01.2019
(73) Proprietor: EH Europe GmbH, 6300 Zug (CH)
(72) Inventor: DEHEM, Patrick, 62033 Arras (FR); LETOMBE, David, 62033 Arras (FR); LINET, Christophe, 62033 Arras (FR)
(74) Representative: Abel & Imray LLP

(56) References cited:
- CN-B- 103 943 901
- US-A- 4 360 766
- US-A- 6 087 805
- US-A1- 2010 121 511
- US-A1- 2012 139 476
- US-A1- 2013 069 594
- US-A1- 2013 149 578
- US-A1- 2014 152 258
- US-A1- 2014 203 786
- US-A1- 2014 354 213

## Description

The present invention concerns a lead acid battery for a forklift truck, a forklift truck comprising said lead acid battery and method of charging the forklift truck.

### Background of the Invention

Often, forklift trucks, and other machinery used in factories and warehouses, are battery driven. In order to recharge those batteries, factories and warehouses typically have charging rooms, where wall mounted chargers are located. The batteries are taken to the charging rooms, for example by driving the forklift trucks into the charging rooms, and connected to the wall mounted chargers for charging. In order to optimise the charging process, various different charging profiles may be used. In order to select the best charging profile, it may be necessary to know the charge and/or discharge history of each battery being charged. Some batteries include monitoring devices which record the charge/discharge information relating to the battery. However, it may not be straightforward to transmit this data to the wall mounted chargers. Such an arrangement may be seen in US2012/0139476.

US2014/203786 discloses a battery pack for driving a forklift truck, and a battery management unit that controls the charging and discharging of the battery pack.

The present invention seeks to mitigate the above-mentioned problems. Alternatively or additionally, the present invention seeks to provide an improved lead acid battery for a forklift truck.

### Summary of the Invention

The present invention provides a lead acid battery for a forklift truck, as set out in claim 1. An embodiment of the present invention provides a forklift truck comprising a lead acid battery, the battery comprising a battery charging module, the battery charging module comprising a battery charger arranged to supply current and voltage to the battery, and a battery monitor, the battery monitor arranged to monitor the charge and/or discharge of the battery, the battery charging module further comprising a mains connector and an interlock relay, the interlock relay configured to prevent the battery providing motive power when the battery is being charged, wherein the battery charging module comprises a control unit, the control unit configured to control the supply of current and voltage from the battery charger to the battery.

The battery charging module may be physically connected to the other battery components, such that movement of the battery results in movement of the battery charging module. Whilst the battery charging module may be removable from the remainder of the battery, the battery charging module is preferably an integrated part of the battery.

The battery monitor may be arranged to supply data regarding the charge and/or discharge of the battery to the battery control unit. The battery control unit may be arranged to analyse the data regarding the charge and/or discharge of the battery. The battery control unit may be arranged to control the supply of current and voltage from the battery charger to the battery based on the analysis of the data regarding the charge and/or discharge of the battery. The battery control unit may include various, preprogramed, charging profiles. The battery control unit may include an algorithm for calculating the required charging profile based on the data regarding the charge and/or discharge of the battery. The battery control unit may comprise a memory. The battery control unit may store data regarding the charge/discharge of the battery over some or all of the lifetime of the battery.

The battery monitor may comprise a current sensor, for example a Hall effect current sensor. The battery monitor may comprise a voltage sensor. The battery monitor may comprise a temperature sensor. The battery monitor may be arrange to monitor the current, voltage, and/or temperature of the battery.

The mains connector is configured to allow the battery charging module to be connected to a mains power supply. The mains connector may be a simple plug. Providing a battery with a battery charging module as described allows the battery to be connected to any suitable mains supply for charging. The battery may be charged by any suitable mains supply, without requiring the battery to be taken to a specific charging point or room, where a battery charger is located. Therefore, the provision of the battery charging module results in a more conveniently charged battery. For example, if the battery is used to power an electric vehicle, the electric vehicle only needs to be driven to the nearest power point for charging, not a specific charging room where battery chargers are situated. In such an arrangement, a vehicle which is driven by the battery will not be capable of being driven away whilst the battery is being charged, which may damage the battery, the forklift truck, and other apparatus.

The battery charging module may comprise an alarm. The alarm may be configured to be activated by the battery monitor. The battery monitor may activate the alarm in response to an over-discharge of the battery. The battery monitor may activate the alarm in response to a low battery voltage. The battery monitor may activate the alarm in response to the battery temperature increasing or decreasing beyond an accepted point. The alarm may be an audible and/or visible alarm, for example a buzzer or flashing light. The alarm may be associated with an interlock relay, the interlock arranged to prevent the battery providing power, for example motive power, when the battery is in an undesirable state. The battery charging module may comprise a wireless communication unit, for example a Bluetooth <RTM> communication unit. The battery charging module may send a notification of an undesirable battery status, for example over-discharge or low battery voltage, to a smart device, for example a smart phone, via the wireless communication unit. The battery charging module may be arranged to send data relating to the monitored battery charge and/or discharge to a smart device. Such data may be sent via the wireless communication unit. The battery charging module may comprise a visual indicator for indicating the status of the battery charging process, for example a series of LEDs.

The battery may comprise a plurality of cells. The battery may comprise a plurality of lead acid cells. The battery may comprise a plurality of 12V lead acid cells.

In addition to providing motive power to the forklift truck, the battery may be arranged to provide power to a lift mechanism of the forklift truck.

According to the invention, there is provided a method of charging a forklift truck according to independent claim 9.

The method may further comprise the step of the battery charging module controlling the current and voltage supplied to the battery by the mains power supply. The method may comprise the step of analysing data collected by the battery monitor, and the battery charging module controlling the current and voltage supplied to the battery by the mains power supply.

### Description of the Drawings

Embodiments of the present invention will now be described by way of example only with reference to the accompanying schematic drawings of which:
- Figure 1: shows a schematic view of a battery according to a first embodiment of the invention; and
- Figure 2: shows a schematic view of a forklift truck according to a second embodiment of the invention.

### Detailed Description

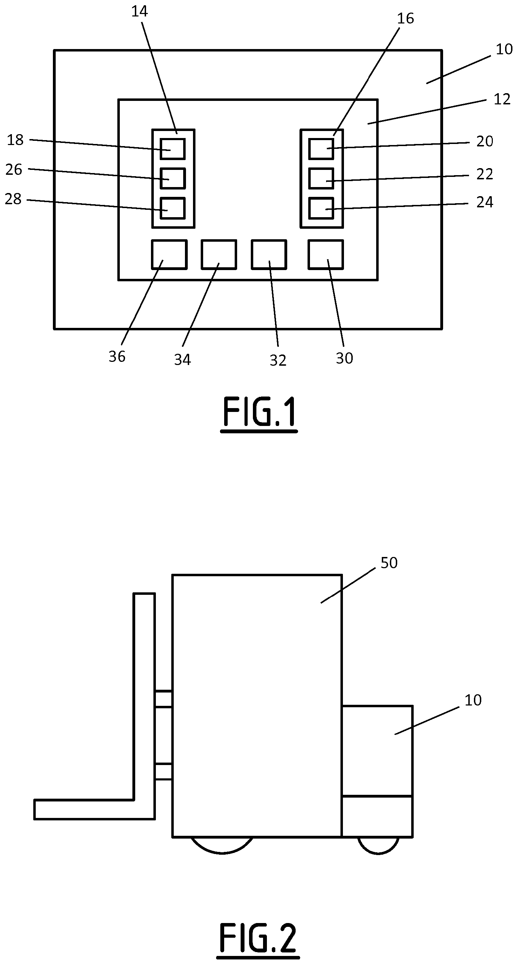

Figure 1 shows a battery 10 comprising a battery charging module 12. The battery 10 is made up of a plurality of 12V lead acid cells. The battery charging module 12 comprises a battery charger 14 and a battery monitor 16. The battery charger 14 comprises a mains connector 18 configured to connect the battery charger 14 to a mains power supply. The battery charger 14 is configured to control the current and voltage supplied to the lead acid battery cells by the mains power supply. The battery charger 14 comprises a current sensor 26 and a voltage sensor 28 to monitor the current and voltage being applied to the lead acid battery cells. The battery monitor 14 is arranged to monitor the discharge of the lead acid battery cells, and comprises a temperature sensor 20, a voltage sensor 22 and a current sensor 24. The battery charging module 12 further comprises a control unit 30, which is arranged to analyse the data obtained by the battery monitor 14, and select an optimum battery charging profile for the battery 10. The battery charging profile may be selected from a preset number of stored battery charging profiles, or the battery charging profile may be generated by the control unit 30 based on a battery charging profile algorithm. The control unit 30 is also arranged to control the battery charging module 12 such that the voltage and current determined to be the best battery charging profile is applied to the battery 10. The person skilled in the art will realise that various ways of connecting the different elements of the battery charging module will be suitable, one example of which is the use of one or more CAN bus.

The battery charging module 14 also comprises an alarm 32 which is activated should the temperature sensor detect an abnormal temperature, for example too hot or too cold. The alarm 32 may also be activated should the voltage sensor 22 and/or current sensor 24 indicate a potential over-discharge of the battery 10. The alarm 32 may be an audible alarm, for example a buzzer, or a visual alarm, such as a flashing light. In some embodiments of the invention, the alarm 32 may be both audible and visual. The battery charging module 14 also comprises an interlock relay 34 which prevents the battery 10 from providing motive power when the battery 10 is detected to be at the wrong temperature, in danger of over-discharge, or in the process of being charged. Therefore, if the battery 10 is connected to a vehicle, for example the forklift truck as described with reference to figure 2, then the vehicle cannot be driven away whilst connected to mains power, or driven to the point of damaging the battery through over-heating or over-discharge.

The battery charging module 12 further comprises a battery status indicator 36, which indicates the battery charge levels of the battery 10. The battery status indicator may be a series of LED lights, an LCD screen, or any other suitable indicator.

Figure 2 shows a forklift truck 50 comprising a battery 10, as described with reference to figure 1. The forklift truck driver may drive the forklift truck 50 to any conventional power socket, and connect the battery 10 to the mains power supply. The battery charger 14 controls the power supplied to the battery 10, to ensure that a suitable charging profile is used. Such an arrangement is much more flexible than the conventional arrangement of providing separate battery chargers, located at fixed locations, for example in specialist battery charging stations.

By way of example only, certain possible variations will now be described. The battery charging module 12 may be supplied as a modular unit, suitable for being connected to a battery 10. In such a way, the battery charging module 12 may be retrofitted to a battery 10, in order to provide a battery and charging system according to the first embodiment of the invention. Providing a standalone battery charging module 12 may be advantageous where a user has one or more batteries, which do not presently include a battery charging module, but which are still within their useful lifetime. The standalone battery charging module 12 may be retrofitted to such batteries, thus providing them with the advantages of the present invention.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments. The scope of the invention is solely defined by the appended claims.

## Claims

1. A lead acid battery (10) for a forklift truck (50), **characterised by** the battery (10) comprising a battery charging module (12), the battery charging module (12) comprising a battery charger (14) arranged to supply current and voltage to the battery (10), and a battery monitor (16), the battery monitor (16) arranged to monitor the charge and/or discharge of the battery (10), the battery charging module (12) further comprising a mains connector , the mains connector configured to connect the battery charger (14) to a mains power supply, and an interlock relay (34), the interlock relay (34) configured to prevent the battery (10) providing motive power when the battery (10) is being charged, wherein the battery charging module (12) comprises a control unit (30), the control unit (30) configured to control the supply of current and voltage from the battery charger (14) to the battery (10).

2. A forklift truck (50) comprising the lead acid battery (10) as claimed in claim 1.

3. A forklift truck (50) as claimed in claim 2, wherein the battery monitor (16) is arranged to supply data regarding the charge and/or discharge of the battery (10) to the battery control unit (30).

4. A forklift truck (50) as claimed in claim 2 or claim 3, wherein the battery control unit (30) is arranged to analyse the data regarding the charge and/or discharge of the battery (10).

5. A forklift truck (50) as claimed in any of claims 2 to 4, wherein the battery control unit (30) is arranged to control the supply of current and voltage from the battery charger (14) to the battery (10) based on the analysis of the data regarding the charge and/or discharge of the battery (10).

6. A forklift truck (50) as claimed in any of claims 2 to 5, wherein the battery charging module (12) comprises an alarm (32).

7. A forklift truck (50) as claimed in any of claims 2 to 6, wherein the interlock relay is arranged to prevent the battery providing motive power when the battery is in an undesirable state, wherein the battery being in an undesirable state includes both the battery being detected to be at a wrong temperature or in danger of overdischarge.

8. A forklift truck (50) as claimed in any of claims 2 to 7, wherein the battery charging module (12)comprises a wireless communication unit.

9. A method of charging a forklift truck (50), the forklift truck (50) according to claim 2, the method comprising the steps of connecting the mains connector (18) of the battery charging module (12) to a mains power supply.

10. A method of charging a forklift truck (50) according to claim 9, the method further comprising the step of the battery charging module (12) controlling the current and voltage supplied to the battery (10) by the mains power supply.

11. A method of charging a forklift truck (50) according to claim 9 or claim 10, wherein the method comprises the step of analysing data collected by the battery monitor (16), and the battery charging module (12) controlling the current and voltage supplied to the battery (10) by the mains power supply.

## Patentansprüche

1. Blei-Säure-Batterie (10) für einen Gabelstapler (50), **dadurch gekennzeichnet, dass** die Batterie (10) ein Batterielademodul (12) aufweist, das ein Batterieladegerät (14), das zum Zuführen von Strom und Spannung zu der Batterie (10) angeordnet ist, und eine Batterieüberwachungsvorrichtung (16), die zum Überwachen des Ladens und/oder Entladens der Batterie (10) angeordnet ist, aufweist, wobei das Batterielademodul (12) ferner einen Netzverbinder, der zum Verbinden des Batterieladegeräts (14) mit einer Netzleistungsversorgung ausgebildet ist, und ein Interlock-Relais (34), das zum Verhindern, dass die Batterie (10) Antriebsleistung liefert, wenn die Batterie (10) geladen wird, ausgebildet ist, aufweist, wobei das Batterielademodul (12) eine Steuerung (30) aufweist, die zum Steuern der Zufuhr von Strom und Spannung von dem Batterieladegerät (14) zu der Batterie (10) ausgebildet ist.

2. Gabelstapler (50) mit der Blei-Säure-Batterie (10) nach Anspruch 1.

3. Gabelstapler (50) nach Anspruch 2, bei dem die Batterieüberwachungsvorrichtung (16) zum Liefern von Daten in Bezug auf das Laden und/oder Entladen der Batterie (10) zu der Batteriesteuereinheit (30) angeordnet ist.

4. Gabelstapler (50) nach Anspruch 2 oder Anspruch 3, bei dem die Batteriesteuereinheit (30) zum Analysieren der Daten in Bezug auf das Laden und/oder Entladen der Batterie (10) angeordnet ist.

5. Gabelstapler (50) nach einem der Ansprüche 2 bis 4, bei dem die Batteriesteuereinheit (30) zum Steuern der Zufuhr von Strom und Spannung von dem Batterieladegerät (14) zu der Batterie (10) basierend auf der Analyse der Daten in Bezug auf das Laden und/oder Entladen der Batterie (10) angeordnet ist.

6. Gabelstapler (50) nach einem der Ansprüche 2 bis 5, bei dem das Batterielademodul (12) einen Alarm (32) aufweist.

7. Gabelstapler (50) nach einem der Ansprüche 2 bis 6, bei dem das Interlock-Relais zum Verhindern, dass die Batterie Antriebsleistung liefert, wenn die Batterie in einem unerwünschtem Zustand ist, angeordnet ist, wobei der unerwünschte Zustand der Batterie beinhaltet, dass detektiert wird, dass die Batterie eine falsche Temperatur aufweist oder eine Gefahr einer Überentladung besteht.

8. Gabelstapler (50) nach einem der Ansprüche 2 bis 7, bei dem das Batterielademodul (12) eine Drahtloskommunikationseinheit aufweist.

9. Verfahren zum Laden eines Gabelstaplers (50), wobei der Gabelstapler (50) gemäß Anspruch 2 ausgebildet ist, wobei das Verfahren die Schritte Verbinden des Netzverbinders (18) des Batterielademoduls (12) mit einer Netzleistungsversorgung aufweist.

10. Verfahren zum Laden eines Gabelstaplers (50) nach Anspruch 9, bei dem das Verfahren ferner den Schritt Steuern des Stroms und der Spannung, die der Batterie (10) von der Netzleistungsversorgung zugeführt werden, durch das Batterielademodul (12) aufweist.

11. Verfahren zum Laden eines Gabelstaplers (50) nach Anspruch 9 oder nach Anspruch 10, bei dem das Verfahren den Schritt Analysieren von Daten, die durch die Batterieüberwachungsvorrichtung (16) gesammelt werden, und Steuern des Stroms und der Spannung, die der Batterie (10) von der Netzleistungsversorgung zugeführt werden, durch das Batterielademodul (12) aufweist.

## Revendications

1. Batterie au plomb - acide (10) de chariot élévateur à fourche (50), **caractérisé en ce que** la batterie (10) comprend un module de charge de batterie (12), le module de charge de batterie (12) comprenant un chargeur de batterie (14) agencé pour fournir un courant et une tension à la batterie (10), et un dispositif de surveillance de batterie (16), le dispositif de surveillance de batterie (16) étant agencé pour surveiller la charge et / ou la décharge de la batterie (10), le module de charge de batterie (12) comprenant en outre un connecteur secteur, le connecteur secteur étant configuré pour connecter le chargeur de batterie (14) à une alimentation secteur, et un relais à verrouillage (34), le relais à verrouillage (34) étant configuré pour empêcher la batterie (10) de fournir une puissance motrice lorsque la batterie (10) est en charge, dans lequel le module de charge de batterie (12) comprend une unité de commande (30), l'unité de commande (30) étant configurée pour commander la fourniture de courant et de tension, du chargeur de batterie (14) à la batterie (10).

2. Chariot élévateur à fourche (50) comprenant la batterie au plomb - acide (10) selon la revendication 1.

3. Chariot élévateur à fourche (50) selon la revendication 2, dans lequel le dispositif de surveillance de batterie (16) est agencé pour fournir à l'unité de commande de batterie (30), des données qui concernent la charge et / ou la décharge de la batterie (10).

4. Chariot élévateur à fourche (50) selon la revendication 2 ou la revendication 3, dans lequel l'unité de commande de batterie (30) est agencée pour analyser les données qui concernent la charge et / ou la décharge de la batterie (10).

5. Chariot élévateur à fourche (50) selon l'une quelconque des revendications 2 à 4, dans lequel l'unité de commande de batterie (30) est agencée pour commander la fourniture de courant et de tension, du chargeur de batterie (14) à la batterie (10), sur la base de l'analyse des données qui concernent la charge et / ou la décharge de la batterie (10).

6. Chariot élévateur à fourche (50) selon l'une quelconque des revendications 2 à 5, dans lequel le module de charge de batterie (12) comprend une alarme (32).

7. Chariot élévateur à fourche (50) selon l'une quelconque des revendications 2 à 6, dans lequel le relais à verrouillage est agencé pour empêcher la batterie de fournir une puissance motrice lorsque la batterie est dans un état non souhaitable, dans lequel la batterie dans un état non souhaitable, comprend le fait que la batterie détectée est à une température anormale ou en risque de décharge excessive.

8. Chariot élévateur à fourche (50) selon l'une quelconque des revendications 2 à 7, dans lequel le module de charge de batterie (12) comprend une unité de communication sans fil.

9. Procédé destiné à charger un chariot élévateur à fourche (50), le chariot élévateur à fourche (50) selon la revendication 2, le procédé comprenant l'étape consistant à connecter le connecteur secteur (18) du module de charge de batterie (12) à une alimentation secteur.

10. Procédé destiné à charger un chariot élévateur à fourche (50) selon la revendication 9, le procédé comprenant en outre l'étape dans laquelle le module de charge de batterie (12) commande le courant et la tension fournis à la batterie (10) par l'alimentation secteur.

11. Procédé destiné à charger un chariot élévateur à fourche (50) selon la revendication 9 ou la revendication 10, dans lequel le procédé comprend l'étape consistant à analyser les données recueillies par le dispositif de surveillance de batterie (16), et celle dans laquelle le module de charge de batterie (12) commande le courant et la tension fournis à la batterie (10) par l'alimentation secteur.
